# EUROPÄISCHE PATENTSCHRIFT

(11) **EP 1 565 951 B1**
(45) Veröffentlichungstag und Bekanntmachung des Hinweises auf die Patenterteilung: **12.02.2020**
(21) Anmeldenummer: 03811750.3
(22) Anmeldetag: 06.11.2003
(51) Int. Cl.: H01M 2/16, H01M 8/02

(54) **LANGZEITSTABILER SEPARATOR FÜR EINE ELEKTROCHEMISCHE ZELLE**
SEPARATOR WITH LONG-TERM STABILITY FOR AN ELECTROCHEMICAL CELL
SEPARATEUR STABLE A LONG TERME POUR UNE CELLULE ELECTROCHIMIQUE

(30) Priorität: 26.11.2002 DE 10255122
(43) Veröffentlichungstag der Anmeldung: 24.08.2005
(73) Patentinhaber: Evonik Operations GmbH, 45128 Essen (DE)
(72) Erfinder: HENNIGE, Volker, 48249 Dülmen (DE); HYING, Christian, 46414 Rhede (DE); HÖRPEL, Gerhard, 48301 Nottuln (DE); NOVAK, Petr, CH-5200 Brugg (CH); VETTER, Jens, CH-5303 Würenlingen (CH)
(74) Vertreter: Tostmann, Holger Carl
(86) Internationale Anmeldenummer: PCT/EP2003/012385
(87) Internationale Veröffentlichungsnummer: WO 2004/049472

(56) Entgegenhaltungen:
- DE-A- 10 115 927
- DE-A- 10 115 928
- US-A- 5 885 657
- US-A1- 2002 023 874

## Beschreibung

Die vorliegende Erfindung betrifft einen Separator für eine elektrochemische Zelle, ein Verfahren zur Herstellung eines solchen Separators sowie eine elektro-chemische Zelle, die einen solchen Separator umfasst.

Unter elektrochemischer Zelle oder Batterie sind in dieser Beschreibung Batterien und Akkumulatoren (Sekundärbatterien) jeder Art zu verstehen, insbesondere Alkali-, wie z.B. Lithium-, Lithiumionen-, Lithium-Polymer-, und Erdalkali-Batterien und -Akkumulatoren und zwar auch in Form von Hochenergie- oder Hochleistungssystemen.

Elektrochemische Zellen umfassen gegenpolige Elektroden, die durch einen Se-parator unter Aufrechterhaltung von Ionenleitfähigkeit, voneinander separiert sind.

Herkömmlicherweise ist ein Separator ein dünner, poröser, elektrisch isolierender Stoff mit hoher Ionendurchlässigkeit, guter mechanischer Festigkeit und Langzeit-stabilität gegen die im System, z. B. im Elektrolyten der elektrochemischen Zelle, verwendeten Chemikalien und Lösemittel. Er soll in elektrochemischen Zellen die Kathode von der Anode elektronisch völlig isolieren. Außerdem muss er dauerelastisch sein und den Bewegungen im System, z. B. im Elektrodenpaket beim Laden und Entladen, folgen.

Der Separator bestimmt maßgeblich die Lebensdauer der Anordnung, in der er verwendet wird, z. B. die einer elektrochemischen Zelle. Die Entwicklung wiederaufladbarer elektrochemischer Zellen oder Batterien wird daher durch die Entwicklung geeigneter Separatormaterialien beeinflusst. Allgemeine Informationen über elektrische Separatoren und Batterien können z. B. bei J.O. Besenhard in "Handbook of Battery Materials" (VCH-Verlag, Weinheim 1999) nachgelesen werden.

Hochenergiebatterien werden in verschiedenen Anwendungen eingesetzt, bei denen es darauf ankommt eine möglichst große Menge an elektrischer Energie verfügbar zu haben. Dies ist beispielsweise bei Traktionsbatterien aber auch bei der Not-Strom-Versorgung mit Batterien (Auxillary Power Systems) der Fall. Die Energiedichte wird dabei häufig in gewichts-[Wh/kg] oder in volumenbezogenen [Wh/L] Größen angegeben. Augenblicklich werden in Hochenergiebatterien Energiedichten von 350 bis 400 Wh/L und von 150 bis 200 Wh/kg erreicht. Die abgefragte Leistung bei solchen Batterien ist nicht so groß, so dass man Kompromisse hinsichtlich des Innenwiderstandes machen kann. Das heißt, dass die Leitfähigkeit des Elektrolyt gefüllten Separators beispielsweise nicht so groß sein muss wie bei Hochleistungsbatterien, so dass dadurch auch andere Separatorkonzepte möglich werden.

So können bei Hochenergiesystemen auch Polymerelektrolyte eingesetzt werden, die mit 0,1 bis 2 mS/cm eine doch recht geringe Leitfähigkeit besitzen. Solche Polymerelektrolytzellen können nicht als Hochleistungsbatterien eingesetzt werden.

Separatormaterialien für die Anwendung in Hochleistungsbatteriesystemen müssen folgende Eigenschaften besitzen:
Sie müssen möglichst dünn sein, um einen geringen spezifischer Platzbedarf zu gewährleisten und um den Innenwiderstand klein zu halten. Um diese geringen Innenwiderstände zu gewährleisten ist es wichtig, dass der Separator auch eine große Porosität aufweist. Ferner müssen sie leicht sein, damit ein geringes spezifisches Gewicht erreicht wird. Außerdem muss die Benetzbarkeit hoch sein, da sonst nicht benetzte Totzonen entstehen.

In vielen, vor allem mobilen Anwendungen werden sehr große Energiemengen benötigt (z. B. in Traktionsbatterien). Die Batterien in diesen Anwendungen speichern im vollgeladenen Zustand also große Energiemengen. Hierfür muss der Separator sicher sein, da in diesen Batterien sehr große spezifische elektrische Energiemengen transportiert werden. Diese Energien dürfen bei einer Fehlfunktion der Batterie bzw. bei einem Unfall nicht unkontrolliert freigesetzt werden, da dies unweigerlich zur Explosion der Zelle unter Feuererscheinung führen würde.

Derzeitig eingesetzte Separatoren bestehen überwiegend aus porösen organischen Polymerfilmen bzw. aus anorganischen Vliesstoffen, wie z. B. Vliesen aus Glas- oder Keramik-Materialien oder auch Keramikpapieren. Diese werden von verschiedenen Firmen hergestellt. Wichtige Produzenten sind hier: Celgard, Tonen, Ube, Asahi, Binzer, Mitsubishi, Daramic und andere.

Die Separatoren aus anorganischen Vliesstoffen oder aus Keramikpapier sind mechanisch sehr unbeständig und führen leicht zu Kurzschlüssen, so dass keine große Standzeit erreicht werden kann.

Ein typischer organischer Separator besteht z. B. aus Polypropylen oder aus einem Polypropylen/Polyethylen/Polypropylen-Verbund. Ein großer Nachteil dieser organischen Polyolefinseparatoren ist deren geringe thermische Belastbarkeit von unter 150 °C. Schon ein kurz anhaltendes Erreichen des Schmelzpunkts dieser Polymere führt zu einem weitgehendem Schmelzen des Separators und zu einem Kurzschluss in der elektrochemischen Zelle, die einen solchen Separator einsetzt. Der Einsatz solcher Separatoren ist daher generell nicht sicher. Denn beim Erreichen von höheren Temperaturen, insbesondere von über 150°C oder gar 180°C werden diese Separatoren zerstört.

Neben dieser Instabilität bei hohen Temperaturen, weisen die Separatoren auf Polymerbasis weitere schwerwiegende Nachteile hinsichtlich der chemischen Beständigkeit auf. Die Polymere in den elektrochemischen Zellen werden nämlich durch den Kontakt mit den Elektroden auch bei normalen Betriebs- und Lagerungstemperaturen wie Raumtemperatur langsam aber stetig angegriffen. Insbesondere kommt es beim Einsatz solcher Separatoren in elektrochemischen Zellen, die Lithium verwenden, zu Problemen. An der Kontaktfläche des Separators mit dem Lithium bzw. mit dem lithiierten Graphit wird das Polymer langsam angegriffen. Ferner werden die Polymer-Separatoren durch die während des Betriebs einer elektrischen Zelle entstehenden Stoffe auch im Inneren des Separators angegriffen. Dadurch können diese Separatoren die Elektroden nicht mehr gesichert vor einem Kurzschluss schützen. Die Standzeit wird dadurch herabgesetzt. Außerdem nimmt die Kapazität einer elektrochemischen Zelle, die solche Separatoren einsetzt, mit der Zeit ab.

Um diese Nachteile zu überwinden, gab es erste Versuche anorganische Verbundmaterialien als Separatoren einzusetzen. So wird in DE 198 38 800 C1 ein elektrischer Separator mit einer Verbundstruktur vorgeschlagen, der ein flächiges, mit einer Vielzahl von Öffnungen versehenes, flexibles Substrat mit einer darauf befindlichen Beschichtung umfasst. Das Material des Substrates ist ausgewählt aus Metallen, Legierungen, Kunststoffen, Glas und Kohlefaser oder einer Kombination solcher Materialien, und die Beschichtung ist eine flächig durchgehende, poröse, elektrisch nicht leitende keramische Beschichtung. Der Einsatz der keramischen Beschichtung verspricht thermische und chemische Beständigkeit. Die Separatoren, die einen Träger oder ein Substrat aus elektrisch leitendem Material aufweisen (wie im Beispiel angegeben), haben sich allerdings als ungeeignet für elektrochemische Zellen herausgestellt, da die Beschichtung in der beschriebenen Dicke nicht großflächig fehlerfrei hergestellt werden kann. Somit kommt es sehr leicht zu Kurzschlüssen. Außerdem sind so dünne Metallgewebe, wie sie für sehr dünne Separatoren benötigt werden, kommerziell nicht verfügbar.

In vorangehenden Arbeiten (DE 101 42 622) konnte gezeigt werden, dass mit einem Material, das ein flächiges, mit einer Vielzahl von Öffnungen versehenes, flexibles Substrat mit einer auf und in diesem Substrat befindlichen Beschichtung umfasst, wobei das Material des Substrates ausgewählt ist aus gewebten oder ungewebten, nicht elektrisch leitfähigen Fasern von Glas oder Keramik oder einer Kombination solcher Materialien und die Beschichtung eine poröse, elektrisch isolierende, keramische Beschichtung ist, und wobei der resultierende Separator eine Dicke von kleiner 100 µm aufweist und biegbar ist, ein Separator herstellbar ist, der in Verbindung mit dem Elektrolyten einen genügend geringen Widerstand aufweist und trotzdem eine ausreichend große Langzeitbeständigkeit aufweist. Der in DE 101 42 622 beschriebene Separator weist zwar eine sehr hohe Leitfähigkeit auf, jedoch genügt der dort beschriebene Separator immer noch nicht den Anforderungen an einen technisch einsetzbaren Separator bezüglich der Dicke und des Gewichts sowie der Sicherheit.

In der DE 102 08 277 wurde das Gewicht und die Dicke des Separators dadurch reduziert, dass ein Polymervlies eingesetzt wurde, aber auch die dort beschriebenen Ausführungsformen eines Separators genügen noch nicht allen Anforderungen an einen Separator für eine Lithium-Hochenergiebatterie, insbesondere weil in dieser Anmeldung besonderer Wert gelegt wurde auf möglichst große Poren des Separators. Mit den dort beschriebenen, bis 5 µm großen Partikeln ist es aber nicht möglich, 10 - 20 µm dicke Separatoren herzustellen, da hier nur einige wenige Partikel übereinander zu liegen kämen. Dadurch würde der Separator zwangsläufig eine große Fehler- und Störstellendichte (z. B. Löcher, Risse, ...) aufweisen. Zudem bestehen die großen Partikel in dieser Schrift aus Al₂O₃ und ZrO₂. Aufgrund der hohen Dichte dieser Keramiken weisen diese Separatoren ein großes Flächengewicht auf, wodurch die massenbezogene spezifische Energiedichte (in Wh/g) reduziert wird.

Auch dieser mehr oder weniger anorganische Separator reagiert aber im Laufe der Zeit mit den Elektroden oder mit anderen in der Batterie vorhandenen Materialien. Vor allem beim Betrieb und bei der Lagerung von Batterien, die mit solchen Separatoren ausgestattet sind, ist dadurch die Lebens- oder Standzeit der Batterie begrenzt, insbesondere bei erhöhter Temperatur.

Der vorliegenden Erfindung lag deshalb die Aufgabe zu Grunde einen Separator für eine elektrochemische Zelle bereitzustellen, der eine erhöhte Standzeit aufweist.

Diese Aufgabe wird mit einem Separator für eine elektrochemische Zelle gelöst, wobei der Separator
(A) einen flexiblen, durchbrochenen Träger,
(B) ein poröses erstes Keramikmaterial mit dem die Durchbrechungen des Trägers gefüllt sind, wobei das Keramikmaterial
   (i) eine Porenstruktur aufweist, die durch eine mittlere Porengröße gekennzeichnet ist, und
   (ii) zur Aufnahme eines Elektrolyten zur Ionenleitung geeignet ist, umfasst und
   dadurch gekennzeichnet ist, dass
(C) die mit dem Elektrolyten kontaktierbare Porenoberfläche des ersten porösen Keramikmaterials zur Erhöhung der Standzeit mit feinen Teilchen eines weiteren Materials belegt ist, wobei die mittlere Teilchengröße der feinen Teilchen im Bereich von 0,5 bis 30 %, vorzugsweise 1 bis 15 %, der mittleren Porengröße des Keramikmaterials liegt, wobei der Separator weiterhin mindestens einen Haftvermittler auf Basis funktionalisierter Silane aufweist.

Vorzugsweise bestehen die feinen Teilchen aus einem Keramikmaterial.

Vorteilhafterweise weist ein solcher Separator, bei dem die Poren eines keramischen Verbundwerkstoffs mit feinen Teilchen belegt sind, eine höhere Standzeit auf gegenüber einem nicht mit feinen Teilchen belegten keramischen Verbundwerkstoff. Überraschenderweise weist ein solcher erfindungsgemäßer Separator auch eine hohe Ionenleitfähigkeit auf, obwohl das für den Elektrolyten zur Verfügung stehende Volumen durch die feinen Teilchen verkleinert ist.

Das Material der feinen Teilchen kann gleich oder verschieden von dem porösen Keramikmaterial sein. Bei einer bevorzugten Ausführungsform des Separators der vorliegenden Erfindung ist das Material der feinen Teilchen verschieden von dem porösen Keramikmaterial. Die feinen Teilchen können beispielsweise SiO₂, Al₂O₃, ZrO₂ oder SiC umfassen.

Bei einer besonders bevorzugten Ausführungsform der vorliegenden Erfindung umfassen die feinen Teilchen Li₂CO₃, Li₃N, LiAlO₂, oder LiₓAl_{y}Ti_{z}(PO₄)₃ mit 1 ≤ x ≤ 2, 0 ≤ y ≤ 1 und 1 ≤ z ≤ 2. Durch diese Teilchen wird die Leitfähigkeit des Separators für Ionen vorteilhaft erhöht.

Der Separator der vorliegenden Erfindung kann einen Elektrolyten zur Ionenleitung umfassen. Bevorzugt ist eine Alkali- und Erdalkaliionenleitung und besonders bevorzugt eine Lithiumionenleitung.

Dem Separator der vorliegenden Erfindung können die feinen Teilchen dem porösen ersten Keramikmaterial einverleibt sein und auf der Porenoberfläche exponiert vorliegen. Bei einer weiteren Ausführungsform der Erfindung ist das poröse erste Keramikmaterial lediglich mit den feinen Teilchen auf der Porenoberfläche beschichtet.

Das Keramikmaterial des erfindungsgemäßen Separators weist vorzugsweise eine mittlere Porengröße im Bereich von 50 nm bis 5 µm auf. Das feine Teilchen aufweisende poröse Keramikmaterial kann ferner eine Porosität von 10 % bis 70% aufweisen. Bevorzugt ist eine Porosität von 20 % bis 50 %. Das Keramikmaterial des erfindungsgemäßen Separators umfasst vorzugsweise ein Oxid von Zirkonium, Silizium und/oder vorzugsweise Aluminium.

Bei einer bevorzugten Ausführungsform der Erfindung ist das erste Keramikmaterial des Separators herstellbar durch Verfestigung eines Schlickers, der Teilchen mit einer großen mittleren Teilchengröße enthält, die die Porenstruktur des Keramikmaterials bestimmen, sowie Teilchen mit einer kleineren mittleren Primärteilchengröße, die bei der Verfestigung des Schlickers die großen Teilchen verkleben.

Der Separator der vorliegenden Erfindung weist vorzugsweise einen durchbrochenen Träger auf, der Polymerfasern, Glas oder Keramik umfasst.

Der durchbrochene Träger umfasst bei einer bevorzugten Ausführungsform der vorliegenden Erfindung Fasern, bevorzugt ausgewählt aus Fasern von Polyamid, Polyacrylnitril, Polyester, wie z. B. Polyethylenterephtalat (PET) und/oder Polyolefin, wie z. B. Polyethylen (PE) oder Polypropylen (PP), Glasfasern oder Keramikfasern. Wenn der durchbrochene Träger Polymerfasern umfasst, können andere als die oben genannten Polymerfasern eingesetzt werden, sofern sie sowohl die für die Herstellung der Separatoren erforderliche Temperaturstabilität aufweisen als auch unter den Betriebsbedingungen in einer elektrochemischen Zelle, vorzugsweise einer Lithiumbatterie, stabil sind. Bei einer bevorzugten Ausführungsform weist der erfindungsgemäße Separator Polymerfasern auf, die eine Erweichungstemperatur von größer 100 °C und eine Schmelztemperatur von größer 110 °C aufweisen.

Der Träger kann Fasern und/oder Filamente mit einem Durchmesser von 1 bis 150 µm, vorzugsweise 1 bis 20 µm, und/oder Fäden mit einem Durchmesser von 3 bis 150 µm, vorzugsweise 10 bis 70 µm, umfassen.

Bei einer weiteren Ausgestaltung der Erfindung ist der Träger ein Vlies mit einer Porenweite von 5 bis 500 µm, vorzugsweise 10 bis 200 µm.

Der Separator der Erfindung kann eine Dicke im Bereich von 10 bis 1000 µm, vorzugsweise 10 bis 100 µm, ganz besonders bevorzugt 10 bis 50 µm aufweisen.

Der Separator der Erfindung kann aufgrund seiner Verbundstruktur einen Biegeradius bis herab zu 100 mm, vorzugsweise bis herab zu 20 mm, ganz besonders bevorzugt bis herab zu 1 mm tolerieren.

Der Separator der vorliegenden Erfindung ist aufgrund seiner erfindungsgemäßen Ausgestaltung hervorragend geeignet für elektrochemische Zellen mit hoher Kapazität und hoher Energiedichte. Insbesondere ist der erfindungsgemäße Separator für elektrochemische Zellen geeignet, die auf der Übertragung von Alkali- und/oder Erdalkali-Metall-Ionen beruhen, wie z. B. Lithium-Metall- und Lithium-Ionen-Batterien. Daher ist es vorteilhaft, wenn diese Separatoren auch die für diese Anwendungen spezifischen Schutzmaßnahmen, wie die Unterbrechungseigenschaft und Kurzschlusseigenschaft mit hoher Kurzschlusstemperatur zeigen. Unter Unterbrechungseigenschaft oder Abschaltung ("shut-down") ist eine Maßnahme zu verstehen, bei der dem Separator für bestimmte Betriebstemperaturen auszusuchende und leicht schmelzende Stoffe, wie zum Beispiel thermoplastische Kunststoffe, einverleibt sein können. Bei einem Ansteigen der Betriebstemperatur durch Störungen wie Überladung, äußere oder innere Kurzschlüsse, können solche leicht schmelzenden Stoffe schmelzen und die Poren des Separators verstopfen. Somit wird der Ionenfluss durch den Separator teilweise oder vollständig blockiert und ein weiteres Ansteigen der Temperatur wird verhindert. Kurzschlusseigenschaft oder Zusammenbruch ("melt-down") bedeutet, dass der Separator bei einer Kurzschlusstemperatur vollständig schmilzt. Dann kann es zwischen großen Flächen der Elektroden einer elektrochemischen Zelle zu einem Kontakt und einem Kurzschluss kommen. Für einen sicheren Betrieb einer elektrochemischen Zelle mit hoher Kapazität und Energiedichte ist eine möglichst hohe Kurzschlusstemperatur wünschenswert. Der erfindungsgemäße Separator weist dabei einen bedeutenden Vorteil auf. Denn das Keramikmaterial das bei dem Separator der vorliegenden Erfindung an dem durchbrochenen Träger haftet, besitzt einen Schmelzpunkt, der weit oberhalb des sicherheitsrelevantes Temperaturbereichs für elektrochemische Zellen liegt. Der Separator der vorliegenden Erfindung weist daher eine überragende Sicherheit auf. Er ist nämlich bei einer bevorzugten sicheren Ausführungsform unter Einsatzbedingungen von mindestens 50 °C stabil. Noch bevorzugterweise ist er bei mindestens 100 °C, 150 °C, und ganz besonders bevorzugt bei mindestens 180 °C stabil.

Polymerseparatoren bringen beispielsweise die für Lithium-Batterien zur Zeit geforderte Sicherheit, indem sie ab einer bestimmten Temperatur (der Shut-Down-Temperatur, die bei ca. 120 °C liegt) jeglichen Stromtransport durch den Elektrolyten unterbinden. Dies geschieht dadurch, dass bei dieser Temperatur das Porengefüge des Separators zusammenbricht und alle Poren verschlossen werden. Dadurch, dass keine Ionen mehr transportiert werden können, kommt die gefährliche Reaktion, die zur Explosion führen kann, zum erliegen. Wird die Zelle aufgrund äußerer Umstände aber weiter erwärmt, so wird bei ca. 150 bis 180 °C die Break-Down-Temperatur überschritten. Ab dieser Temperatur kommt es zum Schmelzen des Separators, wobei dieser sich zusammenzieht. An vielen Stellen in der Batteriezelle kommt es nun zu einem direkten Kontakt zwischen den beiden Elektroden und somit zu einem großflächigem inneren Kurzschluss. Dieser führt zur unkontrollierten Reaktion, die mit einer Explosion der Zelle endet, bzw. der entstehende Druck wird durch ein Überdruckventil (eine Berstscheibe) häufig unter Feuererscheinungen abgebaut.

Bei einer besonders bevorzugten Ausführungsform der Erfindung umfasst der flexible, durchbrochene Träger des Separators Polymerfasern. Bei diesem hybriden Separator, der anorganische Komponenten und polymeres Trägermaterial aufweist, kommt es zum Shut-Down (Abschaltung) wenn durch die hohe Temperatur das Polymergefüge des Trägermaterials schmilzt und in die Poren des anorganischen Materials eindringt und diese dadurch verschließt. Zum sogenannten Melt-Down (Zusammenbruch) kommt es bei dem erfindungsgemäßen Separator dagegen nicht. Der erfindungsgemäße Separator erfüllt also die Anforderungen nach einer von verschiedenen Batterieherstellern geforderten Sicherheitsabschaltung durch den Shut-Down in den Batteriezellen. Die anorganischen Partikel sorgen dafür, dass es niemals zu einem Melt-Down kommen kann. Somit ist sichergestellt, dass es keine Betriebszustände gibt, in denen ein großflächiger Kurzschluss entstehen kann.

Es kann vorteilhaft sein, wenn der Separator einen zusätzlichen nicht inhärenten Shut-Down-Mechanismus aufweist. Dieser kann z. B. dadurch realisiert werden, dass auf oder in dem Separator eine sehr dünne Wachs- oder Polymerpartikelschicht sogenannter Abschaltpartikel, die bei einer gewünschten Abschalttemperatur schmelzen, vorhanden ist. Besonders bevorzugte Materialien, aus denen die Abschaltpartikel bestehen können, sind beispielweise natürliche oder künstliche Wachse, niedrigschmelzende Polymere, wie z. B. Polyolefine, wobei das Material der Abschaltpartikel so ausgewählt wird, das die Partikel bei der gewünschten Abschalttemperatur aufschmelzen und die Poren des Separators verschließen, so dass ein weiterer Ionenfluss verhindert wird.

Vorzugsweise weisen die Abschaltpartikel eine mittlere Partikelgröße (D_{w}) auf, die größer oder gleich der mittleren Porengröße (dₛ) der Poren der porösen anorganischen Schicht des Separator ist. Dies ist insbesondere deshalb vorteilhaft, weil so ein Eindringen und Verschließen der Poren der Separatorschicht, welches eine Reduktion des Porenvolumens und damit der Leitfähigkeit des Separators und auch der Leistungsfähigkeit der Batterie zur Folge hätte, verhindert wird. Die Dicke der Abschaltpartikelschicht ist nur in sofern kritisch, wenn eine zu dicke Schicht den Widerstand in dem Batteriesystem unnötig erhöhen würde. Um eine sichere Abschaltung zu erzielen, sollte die Abschaltpartikelschicht eine Dicke (z_{w}) aufweisen, die von ungefähr gleich der mittleren Partikelgröße der Abschaltpartikel (D_{w}) bis zu 10 D_{w}, vorzugsweise von 2 D_{w} bis D_{w} beträgt. Ein so ausgerüsteter Separator weist ein primäres Sicherheitsmerkmal auf. Im Gegensatz zu den rein organischen Separatormaterialien kann dieser Separator aber nicht vollständig schmelzen und es kann somit nicht zum Melt-Down kommen. Diese Sicherheitsmerkmale sind aufgrund der sehr großen Energiemengen für Hochenergiebatterien sehr wichtig und werden deshalb häufig gefordert.

Auch bei einem inneren Kurzschluss, der z. B. durch einen Unfall verursacht wurde, ist der erfindungsgemäße Separator sehr sicher. Würde sich z. B. ein Nagel durch eine Batterie bohren, geschieht je nach Separator folgendes: Der Polymerseparator würde an der Durchdringungsstelle (Ein Kurzschlussstrom fließt über den Nagel und heizt diesen auf) schmelzen und sich zusammenziehen. Dadurch wird die Kurzschlussstelle immer größer und die Reaktion gerät außer Kontrolle. Bei der Ausführungsform mit dem erfindungsgemäßen hybriden Separator schmilzt allenfalls das polymere Substratmaterial, nicht aber das anorganische Separatormaterial. Somit läuft die Reaktion im Inneren der Batteriezelle nach einem solchen Unfall sehr viel moderater ab. Diese Batterie ist somit deutlich sicherer als eine mit Polymerseparator. Dies kommt vor allem im mobilen Bereich zum Tragen.

Der oben beschriebene erfindungsgemäße Separator für eine elektrochemische Zelle kann nach den folgenden Verfahren hergestellt werden. Das erste dieser Verfahren umfasst folgende Schritte:
(a) Aufbringen einer Dispersion als dünne Schicht auf und in ein Gewebe und/oder Vlies, wobei die Dispersion
   (a1) große Keramikteilchen deren mittlere Teilchengröße eine Porenstruktur der Schicht bereitstellt, die durch einen mittleren Porendurchmesser gekennzeichnet ist,
   (a2) feine Teilchen deren mittlere Teilchengröße im Bereich von 0,5 bis 30 %, vorzugsweise 1 bis 15 %, der mittleren Porengröße des Keramikmaterials liegt, sowie
   (a3) gegebenenfalls Keramikteilchen mit einer mittleren Primärteilchengröße die wesentlich geringer ist als die mittlere Teilchengröße der Keramikteilchen gemäß (a1) und (a2) umfasst, und
(b) Verfestigen der Dispersion bei einer Temperatur von 100 °C bis 680 °C, um einen Separator zu schaffen.

Dieses Verfahren hat den Vorteil, dass es in wenigen Schritten durchgeführt werden kann.

Das zweite Verfahren zur Herstellung eines erfindungsgemäßen Separators für eine elektrochemische Zelle umfasst folgende Schritte:
(i) Bereitstellung eines Verbundwerkstoffs aus einem durchbrochenen Träger, vorzugsweise einem Gewebe und/oder Vlies, sowie einem porösen Keramikmaterial dessen Porenstruktur durch eine mittlere Porengröße gekennzeichnet ist,
(ii) Behandlung des Verbundwerkstoffs mit einer Dispersion aus feinen Teilchen mit einer mittleren Teilchengröße im Bereich von 0,5 bis 30 %, vorzugsweise 1 bis 15 %, der mittleren Porengröße, in einem Dispergiermittel, so dass die für einen Elektrolyt zugängliche Porenoberfläche des Verbundwerkstoffs mit der Dispersion beschichtet wird und die Dispersion vorzugsweise 1 bis 25 Gew.-%, insbesondere 5 bis 15 Gew.-% feine Teilchen enthält;
(iii) Trocknen der Dispersion bei einer Temperatur von 100 °C bis 680 °C, so dass die beschichtete Porenoberfläche mit den feinen Teilchen belegt ist.

Dieses Verfahren weist den Vorteil auf, dass nur die Porenoberfläche mit den feinen Teilchen belegt wird. Ferner ist die Dispersion aus feinen Teilchen im Schritt (ii) unabhängig von der Chemie eines Schlickers zur Herstellung des Verbundwerkstoffs.

Bei dem als zweites beschriebenen Verfahren kann der Verbundwerkstoff ein Separator sein, der erhältlich ist nach dem zuerst beschriebenen Verfahren.

Bei jedem der beschriebenen Verfahren kann die Dispersion eine oder mehrere zusätzliche Komponenten enthalten, die ausgewählt sind aus Haftvermittlern, Dispergierhilfsmitteln, Mitteln zur Einstellung der Viskosität, Mitteln zur Einstellung der Fließeigenschaften oder anderen üblichen Hilfsstoffen zur Herstellung von Dispersionen. Die Haftvermittler, z.B. die unten beschriebenen funktionalisierten Silane, sind besonders vorteilhaft, da sie das erste Keramikmaterial besonders fest an den flexiblen, durchbrochenen Träger aus Polymer, Glas oder Keramik binden können. Beispielsweise können funktionalisierte Silane besonders bevorzugt als Haftvermittler eingesetzt werden, wenn der Träger ein Polymermaterial umfasst. Haftvermittler können aber auch vorteilhafterweise Sole sein, die vorzugsweise die feinen Teilchen fest an das erste poröse Keramikmaterial binden. Vorteilhafterweise umfasst die Dispersion in den Verfahren zur Herstellung des ersten porösen Keramikmaterials als Haftvermittler ein Material, das ausgewählt ist aus der Gruppe, bestehend aus Aluminiumoxid, Siliciumoxid und Zirkoniumoxid. Diese Oxide können in hydrolysierter Form oder nicht hydrolysierter Form entsprechender Vorläuferverbindungen in einer Dispersion vorliegen.

Das Dispergiermittel für die Dispersionen der erfindungsgemäßen Verfahren kann Wasser oder Wasser enthaltende Lösemittel, wie z.B. Alkohole, Ester, Ketone, etc. enthalten, und die feinen Teilchen können hydrolysestabile Elementoxidteilchen sein.

Das Dispergiermittel kann aber auch ein wasserfreies organisches Lösemittel, wie z. B. ein Kohlenwasserstoff, N-Methylpyrrolidon (NMP), Dimethylsulfoxid (DMSO), etc. sein, insbesondere wenn die feinen Teilchen hydrolyseempfindliche Materialien umfassen, wie z. B. Li₃N.

Die feinen Teilchen sollten gut dispergiert vorliegen. Dies kann durch langes Rühren, den Einsatz von Ultraschalldispergatoren, Ultraturrax oder Hochleistungsmühlen (z. B. Attritor) erzielt werden.

Das Verfahren zum Aufbringen einer Dispersion als dünne Schicht auf und in einen flexiblen, durchbrochenen Träger, wie ein Gewebe oder Vlies zur Herstellung eines Verbundwerkstoffs, umfassend diesen flexiblen, durchbrochenen Träger und ein poröses erstes Keramikmaterial mit dem die Durchbrechungen des Trägers gefüllt sind, und die Bereitstellung eines Verbundwerkstoffs aus einem durchbrochenen Träger und einem porösen Keramikmaterial dessen Porenstruktur durch eine mittlere Porengröße gekennzeichnet sind, sind prinzipiell aus WO 99/15262 bekannt. Jedoch lassen sich nicht alle Parameter bzw. Einsatzstoffe, insbesondere nicht elektrisch leitfähige Einsatzstoffe, für die Herstellung des erfindungsgemäßen Separators einsetzen. Insbesondere die zur Herstellung der Dispersion verwendeten Keramikteilchen und feinen Teilchen sowie die als flexiblen, durchbrochenen Träger verwendeten Materialien unterscheiden sich von den dort beschriebenen Einsatzstoffen.

Die Dispersion kann z. B. durch Aufdrucken, Aufpressen, Einpressen Aufrollen, Aufrakeln, Aufstreichen, Tauchen, Spritzen oder Aufgießen auf und in den flexiblen, durchbrochenen Träger gebracht werden.

Die zum Auf- und Einbringen in den flexiblen, durchbrochenen Träger verwendete Dispersion kann ein Sol der Elemente Al, Zr und/oder Si aufweisen, und wird in diesem Fall durch Dispergieren der Keramikpartikel und feinen Teilchen in einem dieser Sole hergestellt. Die Sole können durch Hydrolisieren zumindest einer Verbindung, mit Wasser oder einer Säure oder einer Kombination dieser Verbindungen erhalten werden. Es kann vorteilhaft sein, die zu hydrolysierende Verbindung vor der Hydrolyse in Alkohol oder eine Säure oder eine Kombination dieser Flüssigkeiten zu geben. Als zu hydrolysierende Verbindung wird vorzugsweise zumindest ein Nitrat, ein Chlorid, ein Carbonat, ein Alkoholat oder eine element-organische Verbindung der Elemente Al, Zr und/oder Si hydrolisiert. Die Hydrolyse erfolgt vorzugsweise in Gegenwart von Wasser, Wasserdampf, Eis oder einer Säure oder eine Kombination dieser Verbindungen.

In einer Ausführungsvariante des erfindungsgemäßen Verfahrens werden durch Hydrolyse der zu hydrolisierenden Verbindungen partikuläre Sole hergestellt. Diese partikulären Sole zeichnen sich dadurch aus, dass die in dem Sol durch Hydrolyse entstandenen Verbindungen partikulär vorliegen. Die partikulären Sole können wie oben oder wie in WO 99/15262 beschrieben hergestellt werden. Diese Sole weisen üblicherweise einen sehr hohen Wassergehalt auf, der bevorzugt größer als 50 Gew.-% ist. Es kann vorteilhaft sein, die zu hydrolysierende Verbindung vor der Hydrolyse in Alkohol oder eine Säure oder eine Kombination dieser Flüssigkeiten zu geben. Die hydrolisierte Verbindung kann zum Peptisieren mit zumindest einer organischen oder anorganischen Säure, vorzugsweise mit einer 10 bis 60%igen organischen oder anorganischen Säure, besonders bevorzugt mit einer Mineralsäure, ausgewählt aus Schwefelsäure, Salzsäure, Perchlorsäure, Phosphorsäure und Salpetersäure oder einer Mischung dieser Säuren behandelt werden. Die so hergestellten partikulären Sole können anschließend zur Herstellung von Dispersionen eingesetzt werden, wobei die Herstellung von Dispersionen zum Aufbringen auf mit polymerem Sol vorbehandelten Faservliesen bevorzugt ist.

In einer weiteren Ausführungsvariante des erfindungsgemäßen Verfahrens werden durch Hydrolyse der zu hydrolisierenden Verbindungen polymere Sole hergestellt. Bei dieser bevorzugten Ausführungsvariante des erfindungsgemäßen Verfahrens weist das Sol einen Anteil an Wasser und/oder Säure von kleiner 50 Gew.-% auf. Diese polymeren Sole zeichnen sich dadurch aus, dass die in dem Sol durch Hydrolyse entstandenen Verbindungen polymer (also kettenförmig über einen größeren Raum vernetzt) vorliegen. Die polymeren Sole weisen üblicherweise weniger als 50 Gew.-%, vorzugsweise sehr viel weniger als 20 Gew.-% an Wasser und/oder wässeriger Säure auf. Um auf den bevorzugten Anteil von Wasser und/oder wässeriger Säure zu kommen, wird die Hydrolyse vorzugsweise so durchgeführt, dass die zu hydrolisierende Verbindung mit dem 0,5 bis 10fachen Molverhältnis und bevorzugt mit dem halben Molverhältnis Wasser, Wasserdampf oder Eis, bezogen auf die hydrolisierbare Gruppe, der hydrolisierbaren Verbindung, hydrolisiert wird. Eine bis zu 10fache Menge an Wasser kann bei sehr langsam hydrolisierenden Verbindungen wie z. B. beim Tetraethoxysilan eingesetzt werden. Sehr schnell hydrolisierende Verbindungen wie das Zirkontetraethylat können unter diesen Bedingungen durchaus schon partikuläre Sole bilden, weshalb zur Hydrolyse solcher Verbindungen bevorzugt die 0,5fache Menge an Wasser eingesetzt wird. Eine Hydrolyse mit weniger als der bevorzugten Menge an Wasser, Wasserdampf, oder Eis führt ebenfalls zu guten Ergebnissen. Ein Unterschreiten der bevorzugten Menge von einem halben Molverhältnis um mehr als 50 % ist möglich aber nicht sehr sinnvoll, da beim Unterschreiten dieses Wertes die Hydrolyse nicht mehr vollständig ist und Beschichtungen auf Basis solcher Sole nicht sehr stabil sind.

Zur Herstellung von Solen mit einem gewünschten sehr geringen Anteil an Wasser und/oder Säure im Sol kann es vorteilhaft sein, wenn die zu hydrolisierende Verbindung in einem organischen Lösemittel, insbesondere Ethanol, Isopropanol, Butanol, Amylalkohol, Hexan, Cyclohexan, Ethylacetat und oder Mischungen dieser Verbindungen, gelöst wird bevor die eigentliche Hydrolyse vorgenommen wird. Ein so hergestelltes Sol kann zur Herstellung der erfindungsgemäßen Suspension eingesetzt werden.

Sowohl partikuläre Sole (großer Wasseranteil, geringer Lösemittelanteil) als auch polymere Sole (geringer Wasseranteil, großer Lösemittelanteil) können als Sol in dem erfindungsgemäßen Verfahren zur Herstellung der Dispersion eingesetzt werden. Neben den Solen, die wie gerade beschrieben erhältlich sind, können prinzipiell auch handelsübliche Sole, wie z. B. Zirkonnitratsol oder Silicasol eingesetzt werden. Das Verfahren der Herstellung von Separatoren durch Aufbringen und Verfestigen einer Suspension auf einen Träger an und für sich ist aus DE 101 42 622 und in ähnlicher Form aus WO 99/15262 bekannt, jedoch lassen sich nicht alle Parameter bzw. Einsatzstoffe, auf die Herstellung der erfindungsgemäßen Membran übertragen. Der Prozess, der in WO 99/15262 beschrieben wird, ist in dieser Form insbesondere nicht ohne Abstriche auf polymere Vliesmaterialien übertragbar, da die dort beschriebenen sehr wasserhaltigen Solsysteme, häufig keine durchgängige Benetzung der üblicherweise hydrophoben Polymervliese in der Tiefe ermöglichen, da die sehr wasserhaltigen Solsysteme die meisten Polymervliese nicht oder nur schlecht benetzen. Es wurde festgestellt, dass selbst kleinste unbenetzte Stellen im Vliesmaterial dazu führen können, dass Membranen bzw. Separatoren erhalten werden, die Fehler aufweisen und damit unbrauchbar sind.

Es wurde nun überraschenderweise gefunden, dass ein Solsystem bzw. eine Dispersion, welches bzw. welche im Benetzungsverhalten den Polymeren angepasst wurde, Vliesmaterialien vollständig durchtränkt und somit fehlerfreie Beschichtungen erhältlich sind. Bevorzugt erfolgt bei dem erfindungsgemäßen Verfahren deshalb eine Anpassung des Benetzungsverhaltens des Sols bzw. der Dispersion. Diese Anpassung erfolgt vorzugsweise durch die Herstellung von Solen bzw. Dispersionen, wobei diese Sole einen oder mehrere Alkohole, wie z. B. Methanol, Ethanol oder Propanol oder Mischungen davon, und/oder aliphatische Kohlenwasserstoffe aufweisen, umfassen. Es sind aber auch andere Lösemittelgemische denkbar, die dem Sol bzw. der Suspension zugegeben werden können, um diese im Benetzungsverhalten an das verwendete Vlies anzupassen.

Vorzugsweise beträgt der Massenanteil der suspendierten Komponente (Oxid-Partikel oder Metalloxidpartikel) an der Suspension das 1 bis 100fache, besonders bevorzugt das 1 bis 50fache und ganz besonders bevorzugt das 1 bis 10fache des eingesetzten Sols. Besonders bevorzugt werden zur Herstellung der Dispersion als Oxid-Partikel Aluminiumoxidpartikel eingesetzt, die bevorzugt eine mittleren Partikelgröße von 0,1 bis 10 µm, insbesondere 0,5 bis 5 µm aufweisen. Aluminiumoxid-Partikel im Bereich der bevorzugten Partikelgrößen werden beispielweise von der Firma Martinswerke unter den Bezeichnungen MDS 6; DN 206, MZS 3 und MZS 1 und von der Fa. Alcoa mit der Bezeichnung CL3000 SG, CT800 SG und HVA SG angeboten.

Es hat sich herausgestellt, dass der Einsatz von handelsüblichen Oxidpartikeln unter Umständen zu unbefriedigenden Ergebnissen führt, da häufig eine sehr große Korngrößenverteilung vorliegt. Es werden deshalb bevorzugt Oxidpartikel eingesetzt, die durch ein herkömmliches Verfahren, wie z. B. Windsichten, Zentrifugieren und Hydroklassieren klassiert wurden. Bevorzugt werden als Oxidpartikel solche Fraktionen eingesetzt, bei denen der Grobkornanteil, welcher bis zu 10 % der Gesamtmenge ausmacht, durch Nasssiebung abgetrennt wurde. Dieser störende Grobkornanteil, der auch durch die bei der Herstellung der Schlicker typische Verfahren wie etwa Mahlen (Kugelmühle, Attritormühle, Mörsermühle), Dispergieren (Ultra-Turrax, Ultraschall), Zerreiben oder Zerhacken nicht oder nur sehr schwer zerkleinert werden kann, kann z. B. bestehen aus Aggregaten, harten Agglomeraten, Mahlkugelabrieb. Durch die vorgenannten Maßnahmen wird erreicht, dass die anorganische poröse Schicht eine sehr gleichmäßige Porengrößenverteilung aufweist. Dies wird insbesondere dadurch erreicht, dass Oxid-Partikel eingesetzt werden, die eine maximale Partikelgröße von vorzugsweise 1/3 bis 1/5 und besonders bevorzugt kleiner oder gleich 1/10 der Dicke des eingesetzten Vlieses aufweisen.

Die folgende Tabelle 1 gibt eine Übersicht, wie sich die Wahl der verschiedenen Aluminiumoxide auf die Porosität und die resultierende Porengröße der jeweiligen porösen anorganischen Beschichtung auswirkt. Zur Ermittlung dieser Daten wurden die entsprechenden Schlicker (Suspensionen oder Dispersionen) hergestellt und als reine Formkörper bei 200 °C getrocknet und verfestigt.

**Tabelle 1: Typische Daten von Keramiken in Abhängigkeit vom eingesetzten Pulvertyp**

| Al₂O₃-Typ | Porosität / % | Mittl. Porengröße / nm |
|---|---|---|
| AlCoA CL3000SG | 51 | 755 |
| AlCoA CT800SG | 53,1 | 820 |
| AlCoA HVA SG | 53,3 | 865 |
| AlCoA CL4400FG | 44,8 | 1015 |
| Martinsw. DN 206 | 42,9 | 1025 |
| Martinsw. MDS 6 | 40,8 | 605 |
| Martinsw. MZS 1 + Martinsw. MZS 3 = 1:1 | 47 % | 445 |
| Martinsw. MZS 3 | 48 % | 690 |

Zur Verbesserung der Haftung der anorganischen Komponenten an Polymerfasern als Substrat kann es vorteilhaft sein, den eingesetzten Suspensionen Haftvermittler, wie z. B. organofunktionelle Silane beizufügen. Als Haftvermittler sind insbesondere Verbindungen, ausgewählt aus den Octylsilanen, den Vinylsilanen, den aminfunktionalisierten Silanen und/oder den Glycidyl-funktionalisierten Silanen, wie z. B. die Dynasilane der Fa. Degussa einsetzbar. Besonders bevorzugte Haftvermittler für Polymerfasern, wie Polyethylen (PE) und Polypropylen (PP) sind Vinyl-, Methyl- und Octylsilane, wobei eine ausschließliche Verwendung von Methylsilanen nicht optimal ist, für Polyamide und Polyamine sind es Aminfunktionelle Silane, für Polyacrylate und Polyester sind es Glycidyl-funktionalisierte Silane und für Polyacrylnitril kann man auch Glycidylfunktionalisierte Silane einsetzen. Auch andere Haftvermittler sind einsetzbar, die aber auf die jeweiligen Polymere abgestimmt sein müssen. Die Haftvermittler werden vorteilhafterweise so ausgewählt, dass die Verfestigungstemperatur unterhalb des Schmelz- oder Erweichungspunktes des als Substrat eingesetzten Polymeren und unterhalb dessen Zersetzungstemperatur liegt. Bevorzugt weisen erfindungsgemäße Dispersionen sehr viel weniger als 25 Gew.-%, vorzugsweise weniger als 10 Gew.-% Verbindungen auf, die als Haftvermittler fungieren können. Ein optimaler Anteil an Haftvermittler ergibt sich aus der Beschichtung der Fasern und/oder Partikel mit einer monomolekularen Lage des Haftvermittlers. Die hierzu benötigte Menge an Haftvermittler in Gramm kann durch Multiplizieren der Menge der eingesetzten Oxide, beziehungsweise der Fasern (in g) mit der spezifischen Oberfläche der Materialien (in m²g⁻¹) und anschließendes Dividieren durch den spezifischen Platzbedarf der Haftvermittler (in m²g⁻¹) erhalten werden, wobei der spezifische Platzbedarf häufig in der Größenordnung von 300 bis 400 m²g⁻¹ liegt.

Die nachfolgende Tabelle 2 enthält einen beispielhaften Überblick über einsetzbare Haftvermittler auf Basis von organofunktionellen Si-Verbindungen für typische als Vliesmaterial verwendete Polymere.

**Tabelle 2**

| Polymer | Organofunktionstyp | Haftvermittler |
|---|---|---|
| PAN | Glycidyl | GLYMO |
| | Methacryl | MEMO |
| PA | Amino | AMEO, DAMO |
| PET | Methacryl | MEMO |
| | Vinyl | VTMO, VTEO, VTMOEO |
| PE, PP | Amino | AMEO, AMMO |
| | Vinyl | VTMO, VTEO, Silfin |
| | Methacryl | MEMO |

| | | |
|---|---|---|
| Mit: AMEO = 3-Aminopropyltriethoxysilan DAMO = 2-Aminoethyl-3-aminopropyltrimethoxysilan GLYMO = 3-Glycidyloxytrimethoxysilan MEMO = 3-methacryloxypropyltrimethoxysilan Silfin = Vinylsilan + Initiator + Katalysator VTEO = Vinyltriethoxysilan VTMO = Vinyltrimethoxysilan VTMOEO = Vinyltris(2-methoxyethoxy)silan | | |

In einer besonderen Ausführungsform des erfindungsgemäßen Verfahrens werden die oben genannten Haftvermittler in einem vorgeschalteten Schritt auf den flexiblen, durchbrochenen Träger, wie z.B. ein Polymervlies aufgebracht. Hierzu werden die Haftvermittler in einem geeigneten Lösemittel, wie z. B. Ethanol gelöst. Diese Lösung kann auch noch eine geringe Menge an Wasser, vorzugsweise die 0,5 bis 10fache Menge bezogen auf die molare Menge der hydrolysierbaren Gruppe, und kleine Mengen einer Säure, wie z. B. HCl oder HNO₃, als Katalysator für die Hydrolyse und Kondensation der Si-OR-Gruppen enthalten. Durch die bekannten Techniken, wie z. B. Aufsprühen, Aufdrucken, Aufpressen, Einpressen Aufrollen, Aufrakeln, Aufstreichen, Tauchen, Spritzen oder Aufgießen wird diese Lösung auf das Substrat aufgebracht und der Haftvermittler durch eine Temperaturbehandlung bei 50 bis maximal 350 °C auf dem Träger fixiert. Erst nach dem Aufbringen des Haftvermittlers erfolgt bei dieser Ausführungsvariante des erfindungsgemäßen Verfahrens das Aufbringen und Verfestigen der Dispersion.

Durch das Aufbringen eines Haftvermittlers vor dem eigentlichen Aufbringen der Dispersion kann das Haftverhalten der flexiblen Träger insbesondere gegenüber wässrigen, partikulären Solen verbessert werden, weshalb insbesondere so vorbehandelte Träger mit Suspensionen auf Basis von handelsüblichen Solen, wie z. B. Zirkonnitratsol oder Silicasol erfindungsgemäß beschichtet werden können. Diese Vorgehensweise des Aufbringens eines Haftvermittlers bedeutet aber auch, dass das Herstellverfahren der erfindungsgemäßen Separatoren um einen Zwischen- bzw. Vorbehandlungsschritt erweitert werden muss. Dies ist machbar allerdings auch aufwändiger als die Verwendung von angepassten Solen denen Haftvermittler beigegeben wurden, hat aber auch den Vorteil, dass auch beim Einsatz von Dispersionen auf Basis von handelsüblichen Solen bessere Ergebnisse erzielt werden.

Die erfindungsgemäßen Beschichtungen werden durch Verfestigen der Dispersion in und auf dem Träger in und auf den Träger gebracht. Erfindungsgemäß kann die auf und im Träger vorhandene Dispersion durch Erwärmen auf 50 bis 350 °C verfestigt werden. Da bei der Verwendung polymerer Substratmaterialien die maximale Temperatur durch das Polymervlies vorgegeben wird, ist diese entsprechend anzupassen. So wird je nach Ausführungsvariante des erfindungsgemäßen Verfahrens die auf und in einem Vlies vorhandene Dispersion durch Erwärmen auf 100 bis 350 °C und ganz besonders bevorzugt durch Erwärmen auf 110 bis 280 °C verfestigt. Es kann vorteilhaft sein, wenn das Erwärmen für 1 Sekunde bis 60 Minuten bei einer Temperatur von 100 bis 350 °C erfolgt. Besonders bevorzugt erfolgt das Erwärmen der Dispersion zum Verfestigen auf eine Temperatur von 110 bis 300 °C, ganz besonders bevorzugt bei einer Temperatur von 110 bis 280 °C und vorzugsweise für 0,5 bis 10 min.

Das erfindungsgemäße Erwärmen des Verbundes kann mittels erwärmter Luft, Heißluft, Infrarotstrahlung oder durch andere Erwärmungsmethoden nach dem Stand der Technik erfolgen.

Das erfindungsgemäße Verfahren kann z. B. so durchgeführt werden, dass der flexible Träger, z.B. ein Polymervlies, von einer Rolle abgerollt wird, mit einer Geschwindigkeit von 1 m/h bis 2 m/s, vorzugsweise mit einer Geschwindigkeit von 0,5 m/min. bis 20 m/min und ganz besonders bevorzugt mit einer Geschwindigkeit von 1 m/min bis 5 m/min durch zumindest eine Apparatur, welche die Dispersion auf und in den Träger bringt, wie z. B. eine Walze, und zumindest eine weitere Apparatur, welche das Verfestigen der Dispersion auf und in dem Träger durch Erwärmen ermöglicht, wie z. B. ein elektrisch beheizter Ofen durchläuft und das so hergestellte Produkt auf einer zweiten Rolle aufgerollt wird. Auf diese Weise ist es möglich, einen erfindungsgemäßen Separator im Durchlaufverfahren herzustellen. Auch die Vorbehandlungsschritte können im Durchlaufverfahren unter Beibehaltung der genannten Parameter durchgeführt werden.

Es hat sich als besonders vorteilhaft erwiesen, wenn das Verfahren so durchgeführt wird, dass der Träger, insbesondere ein Polymervlies während des Beschichtungsprozesses bzw. der Beschichtungsprozesse eine maximale Spannung in Längsrichtung von 10 N/cm, vorzugsweise von 3 N/cm aufweist. Unter Beschichtungsprozessen werden dabei alle Verfahrenschritte verstanden, bei denen ein Material auf und in den Träger gebracht wird und dort durch Wärmebehandlung verfestigt wird, also auch das Aufbringen des Haftvermittlers. Vorzugsweise wird der Träger während der Beschichtungsprozesse mit einer maximalen Kraft von 0,01 N/cm gespannt. Besonders bevorzugt kann es sein, wenn das Substrat während des Beschichtungsprozesses bzw. der Beschichtungsprozesse in Längsrichtung ungespannt geführt wird.

Durch die Kontrolle der Zugspannung während der Beschichtung kann vermieden werden, dass eine Deformation (auch elastische) des Trägermaterials stattfindet. Durch eine evtl. Deformation (Dehnung) bei zu hoher Zugspannung kann die keramische Beschichtung dem Träger-Werkstoff nicht folgen, was dazu führt, das die Beschichtung sich auf der gesamten Fläche vom Vliesmaterial löst. Das daraus resultierende Produkt kann dann nicht bestimmungsgemäß verwendet werden.
Soll der erfindungsgemäße Separator mit einem zusätzlichen automatischen Abschaltmechanismus ausgerüstet werden, so kann dies z. B. dadurch geschehen, dass nach dem Verfestigen der auf das Substrat aufgebrachten Dispersion eine Schicht aus Partikeln, die bei einer gewünschten Temperatur schmelzen und die Poren des Separators verschließen, so genannte Abschaltpartikeln, zur Erzeugung eines Abschaltmechanismus auf den Separator aufgebracht und fixiert wird. Die Schicht aus Abschaltpartikeln kann z. B. durch Aufbringen einer Suspension von Wachspartikeln mit einer mittleren Partikelgröße größer der mittleren Porengröße des Separators in einem Sol, Wasser, Lösemittel oder Lösemittelgemisch erzeugt werden.

Die Suspension zur Aufbringung der Partikel enthält vorzugsweise von 1 bis 50 Gew.-%, bevorzugt von 5 bis 40 Gew.-% und ganz besonders bevorzugt von 10 bis 30 Gew.-% an Abschaltpartikeln, insbesondere Wachspartikeln in der Suspension.

Da die anorganische Beschichtung des Separators häufig einen sehr hydrophilen Charakter hat, hat es sich als vorteilhaft erwiesen, wenn die Beschichtung des Separators unter Verwendung eines Silans in einem polymeren Sol als Haftvermittler hergestellt wurden und somit hydrophobiert wurden. Um eine gute Haftung und gleichmäßige Verteilung der Abschaltpartikel in der Abschaltschicht auch auf hydrophilen porösen anorganischen Separatorschichten zu erreichen, sind mehrere Varianten möglich.

In einer Ausführungsvariante des erfindungsgemäßen Verfahrens hat es sich als vorteilhaft erwiesen, die poröse anorganische Schicht des Separators vor dem Aufbringen der Abschaltpartikel zu hydrophobieren. Die Herstellung hydrophober Membrane, die nach dem selben Prinzip funktioniert, wird beispielsweise in WO 99/62624 beschrieben. Vorzugsweise wird die poröse anorganische Beschichtung durch Behandlung mit Alkyl-, Aryl- oder Fluoralkylsilanen, wie sie z. B. unter dem Namen Markennamen Dynasilan von der Degussa vertrieben werden, hydrophobiert. Es können dabei z. B. die bekannten Methoden der Hydrophobierung, die unter anderem für Textilien angewendet werden (D. Knittel; E. Schollmeyer; Melliand Textilber. (1998) 79(5), 362-363)*,* unter geringfügiger Änderung der Rezepturen, auch für die porösen Beschichtungen des Separators angewendet werden. Zu diesem Zweck wird die Beschichtung bzw. der Separator mit einer Lösung behandelt, die zumindest einen hydrophoben Stoff aufweist. Es kann vorteilhaft sein, wenn die Lösung als Lösemittel Wasser, welches vorzugsweise mit einer Säure, vorzugsweise Essigsäure oder Salzsäure, auf einen pH-Wert von 1 bis 3 eingestellt wurde, und/oder einen Alkohol, vorzugsweise Ethanol, aufweist. Der Anteil an mit Säure behandeltem Wasser bzw. an Alkohol am Lösemittel kann jeweils von 0 bis 100 Vol.-% betragen. Vorzugsweise beträgt der Anteil an Wasser am Lösemittel von 0 bis 60 Vol.-% und der Anteil an Alkohol von 40 bis 100 Vol.-%. In das Lösemittel werden zum Erstellen der Lösung 0,1 bis 30 Gew.-%, vorzugsweise 1 bis 10 Gew.-% eines hydrophoben Stoffes gegeben werden. Als hydrophobe Stoffe können z. B. die oben aufgeführten Silane verwendet werden. Überraschenderweise findet eine gute Hydrophobierung nicht nur mit stark hydrophoben Verbindungen, wie zum Beispiel mit dem Triethoxy(3,3,4,4,5,5,6,6,7,7,8,8-tridecafluoroctyl)silan statt, sondern eine Behandlung mit Methyltriethoxysilan oder i-Butyltriethoxysilan ist vollkommen ausreichend, um den gewünschten Effekt zu erzielen. Die Lösungen werden, zur gleichmäßigen Verteilung der hydrophoben Stoffe in der Lösung, bei Raumtemperatur gerührt und anschließend auf die anorganische Beschichtung des Separators aufgebracht und getrocknet. Das Trocknen kann durch eine Behandlung bei Temperaturen von 25 bis 100 °C beschleunigt werden.

In einer weiteren Ausführungsvariante des erfindungsgemäßen Verfahren kann die poröse anorganische Beschichtung vor dem Aufbringen der Abschaltpartikel auch mit anderen Haftvermittlern behandelt werden. Die Behandlung mit einem der unten genannten Haftvermittler kann dann ebenfalls wie oben beschrieben erfolgen, d. h. dass die poröse anorganische Schicht mit einem polymeren Sol, welches ein Silan als Haftvermittler aufweist, behandelt wird.

Die Schicht aus Abschaltpartikeln wird vorzugsweise durch Aufbringen einer Suspension von Abschaltpartikeln in einem Suspensionsmittel, ausgewählt aus einem Sol, Wasser oder Lösemittel, wie z. B. Alkohol, Ether oder Ketone, oder einem Lösemittelgemisch auf die anorganische Beschichtung des Separators und anschließendes Trocknen erzeugt. Die Partikelgröße der in der Suspension vorliegenden Abschaltpartikel ist prinzipiell beliebig. Es ist jedoch vorteilhaft, wenn in der Suspension Abschaltpartikel mit einer mittleren Partikelgröße (D_{w}) größer oder gleich, vorzugsweise größer der mittleren Porengröße der Poren der porösen anorganischen Schicht (dₛ) vorliegen, da so sichergestellt wird, dass die Poren der anorganischen Schicht bei der Herstellung des erfindungsgemäßen Separators nicht durch Abschaltpartikel verstopft werden. Bevorzugt weisen die eingesetzten Abschaltpartikel eine mittlere Partikelgröße (D_{w}) auf, die größer als der mittlere Porendurchmesser (dₛ) und kleiner 5 dₛ, besonders bevorzugt kleiner 2 dₛ beträgt.

Sollte es gewünscht sein Abschaltpartikel einzusetzen, die eine Partikelgröße kleiner der Porengröße der Poren der porösen anorganischen Schicht aufweisen, so muss vermieden werden, dass die Partikel in die Poren der porösen anorganischen Separatorschicht eindringen. Gründe für den Einsatz solcher Partikel können z. B. in großen Preisunterschieden aber auch in der Verfügbarkeit solcher Partikel liegen. Eine Möglichkeit das Eindringen der Abschaltpartikel in die Poren der porösen anorganischen Schicht zu verhindern besteht darin, die Viskosität der Suspension so einzustellen, dass in Abwesenheit von äußeren Scherkräften kein Eindringen der Suspension in die Poren der anorganischen Schicht des Separators erfolgt. Eine solch hohe Viskosität der Suspension kann z. B. dadurch erreicht werden, dass der Suspension Hilfsstoffe, die das Fließverhalten beeinflussen, wie z. B. Kieselsäuren (Aerosil, Degussa) hinzugefügt werden. Beim Einsatz von Hilfsstoffen wie z. B. Aerosil 200 ist häufig ein Anteil von 0,1 bis 50 Gew.-%, vorzugsweise 0,5 bis 10 Gew.-% Kieselsäure, bezogen auf die Suspension, schon ausreichend um eine genügend hohe Viskosität der Suspension zu erzielen. Der Anteil an Hilfsstoffen kann jeweils durch einfache Vorversuche ermittelt werden.

Es kann vorteilhaft sein, wenn die eingesetzte Abschaltpartikel aufweisende Suspension Haftvermittler aufweist. Eine solche Haftvermittler aufweisende Suspension kann direkt auf eine anorganische Schicht des Separators aufgebracht werden, auch wenn diese nicht vor dem Aufbringen hydrophobiert wurde. Natürlich kann eine Haftvermittler aufweisende Suspension auch auf eine hydrophobierte Schicht oder auf eine Separatorschicht, bei deren Herstellung ein Haftvermittler eingesetzt wurde, aufgebracht werden. Als Haftvermittler in der Abschaltpartikel aufweisenden Suspension werden vorzugsweise Silane eingesetzt, die Amino-, Vinyl- oder Methacrylseitengruppen aufweisen. Solche Haftvermittler sind z. B. AMEO (3-Aminopropyltriethoxysilan), MEMO (3-Methacryloxypropyl-trimethoxysilan), Silfin (Vinylsilan + Initiator + Katalysator), VTEO (Vinyltriethoxysilan) oder VTMO (Vinyltrimethoxysilan). Solche Silane sind z. B. von der Degussa auch in wässriger Lösung unter der Bezeichnung Dynasilan 2926, 2907 oder 2781 erhältlich. Ein Anteil von maximal 10 Gew.-% an Haftvermittler hat sich als ausreichend für die Sicherstellung einer genügend großen Haftung der Abschaltpartikel an der porösen anorganischen Schicht herausgestellt. Vorzugsweise weisen Haftvermittler aufweisende Suspensionen von Abschaltpartikeln von 0,1 bis 10 Gew.-%, bevorzugt von 1 bis 7,5 Gew.-% und ganz besonders bevorzugt von 2,5 bis 5 Gew.-% an Haftvermittler bezogen auf die Suspension auf.

Als Abschaltpartikel können alle Partikel eingesetzt werden, die einen definierten Schmelzpunkt aufweisen. Das Material der Partikel wird dabei entsprechend der gewünschten Abschalttemperatur ausgewählt. Da bei den meisten Batterien relativ niedrige Abschalttemperaturen gewünscht werden, ist es vorteilhaft solche Abschaltpartikel einzusetzen, die ausgewählt sind aus Partikeln aus Polymeren, Polymermischungen, natürlichen und/oder künstlichen Wachsen. Besonders bevorzugt werden als Abschaltpartikel Partikel aus Polypropylen- oder Polyethylenwachs eingesetzt.

Das Aufbringen der die Abschaltpartikel aufweisenden Suspension kann durch Aufdrucken, Aufpressen, Einpressen, Aufrollen, Aufrakeln, Aufstreichen, Tauchen, Spritzen oder Aufgießen auf die poröse anorganische Schicht des Separators erfolgen. Die Abschaltschicht wird vorzugsweise dadurch erhalten, dass die aufgebrachte Suspension bei einer Temperatur von Raumtemperatur bis 100 °C, vorzugsweise von 40 bis 60 °C getrocknet wird.

Es kann vorteilhaft sein, wenn die Abschaltpartikel nach dem Aufbringen auf die poröse anorganische Schicht durch zumindest einmaliges Erwärmen auf eine Temperatur oberhalb der Glastemperatur, so dass ein Anschmelzen der Partikel ohne Änderung der eigentlichen Form erreicht wird, fixiert werden. Auf diese Weise kann erreicht werden, dass die Abschaltpartikel besonders gut an der porösen anorganischen Separatorschicht haften.

Das Aufbringen der die Abschaltpartikel aufweisenden Suspension mit anschließendem Trocknen sowie ein eventuelles Erwärmen über die Glasübergangstemperatur kann kontinuierlich oder quasi kontinuierlich durchgeführt werden. Wird eine flexibler Separator als Ausgangsmaterial eingesetzt, so kann diese wiederum von einer Rolle abgewickelt, durch eine Beschichtungs-, Trocknungs- und gegebenenfalls Erwärmungsapparatur geführt und anschließend wieder aufgerollt werden.

Erfindungsgemäß wird auch eine elektrochemische Zelle, insbesondere eine Lithium-Batterie, Lithiumionen-Batterie oder eine Lithium-Polymer-Batterie bereitgestellt, wobei die Zelle einen der oben beschriebenen Separatoren umfasst.

Der Elektrolyt, der in einer solchen elektrochemischen Zelle eingesetzt wird, kann jeder übliche in elektrochemischen Zellen einsetzbare Elektrolyt sein. Als Beispiele können Lösungen eines löslichen Lithiumsalzes in einem oder mehreren organischen Lösemitteln, wie zum Beispiel Ethylencarbonat und Dimethylcarbonat (EC-DMC) genannt werden. Andere geeignete nicht wässerige Lösemittel schließen zum Beispiel □-Butyrolacton, Tetrahydrofuran, 1,2-Dimethoxyethan, Propylencarbonat, Diethylcarbonat, Methylethylcarbonat, Diethoxyethan, Dioxolan und Methylformiat ein. Geeignete lösliche Lithiumsalze sind die üblicherweise verwendeten. Als Beispiele können LiPF₆, LiAsF₆, LiBF₄, LiClO₄, LiCF₃SO₃, LiN(CF₃SO₂)₃ und LiN(C₂F₅SO₂)₃ genannt werden, wobei LiPF₆ besonders bevorzugt ist.

Außerdem umfasst die vorliegende Erfindung die Verwendung eines erfindungsgemäßen Separators zur Herstellung einer elektrochemischen Zelle, insbesondere einer Lithium-Batterie, Lithiumionen-Batterie oder einer Lithium-Polymer-Batterie, jeweils bevorzugt für Hochstromanwendungen.

Vorzugsweise ist die elektrochemische Zelle wiederaufladbar.

Unter der mittleren Porengröße und der Porosität ist die mittlere Porengröße und die Porosität zu verstehen, die nach der bekannten Methode der Quecksilber-Porosimetrie bestimmt werden kann mit einem Porosimeter 4000 von Carlo Erba Instruments. Der Quecksilber-Porosimetrie liegt die Washburn-Gleichung zu Grunde (E. W. Washburn, "Note on a Method of Determining the Distribution of Pore Sizes in a Porous Material", Proc. Natl. Acad. Sci., 7, 115-16 (1921)).
Die Erfindung wird nun im Folgenden anhand von Beispielen, Test- und Referenzbeispielen beschrieben.

### Beispiele, Test- und Referenzbeispiele

### Referenzbeispiel 1: S450PET Separator

Zu 130 g Wasser und 15 g Ethanol werden zunächst 30 g einer 5 Gew.-%igen, wäss-erigen HNO₃-Lösung, 10 g Tetraethoxysilan, 2,5 g Methyltriethoxysilan und 7,5 g Dynasilan GLYMO gegeben. In diesem Sol, das zunächst für einige Stunden gerührt wurde, werden dann jeweils 125 g der Aluminiumoxide Martoxid MZS-1 und Martoxid MZS-3 suspendiert, um einen Schlicker (Suspension) zu erhalten. Dieser Schlicker wird für mindestens weitere 24 h mit einem Magnetrührer homogenisiert, wobei das Rührgefäß abgedeckt werden muss, damit es nicht zu einem Lösemittelverlust kommt.

Ein 56 cm breites PET-Vlies mit einer Dicke von ca. 13 µm und einem Flächengewicht von etwa 6 g/m² wird dann mit einem kontinuierlichen Aufwalzverfahren (Bandgeschwindigkeit ca. 30 m/I , T = 200 °C) mit obigem Schlicker beschichtet. Man erhält am Ende einen Separator mit einer mittleren Porenweite von 450 nm, der eine sehr gute Haftfestigkeit und eine Dicke von ca. 30 µm aufwies.

### Testbeispiel 1: Lithium Batterie mit S450PET Separator aus Referenzbeispiel 1

Der in Referenzbeispiel 1 hergestellte S450PET-Separator wird in eine Li-lonen-Zelle, bestehend aus einer Positiv-Masse aus LiCoO₂, einer Negativ-Masse bestehend aus Graphit und einem Elektrolyten aus LiPF₆ in Ethylencarbonat/Dimethylcarbonat (EC/DMC), eingebaut [LiCoO₂ // S450PET, EC/DMC 1:1, IM LiPF₆ // Graphit]. Es wurde das Ladeverhalten dieser Batterie überprüft. Die Batterie zeigt nach mehr als 250 Zyklen einen deutlichen Abfall der Kapazität um bis zu 25 Prozent.

Die Kapazität dieser Batterie nimmt nach 200 Zyklen noch deutlich stärker ab, wenn die Zelle zwischen den Zyklen in voll-, teil- oder entladenem Zustand bei erhöhter Temperatur (50 - 60 °C) gelagert wird.

### Herstellung erfindungsgemäßer Separatoren

### Beispiel 1: Herstellung eines erfindungsgemäßen S100PET Separators

Zu 145 g Wasser werden zunächst 30 g einer 5 Gew.-%igen, wässerigen HCI-Lösung, 10 g Tetraethoxysilan, 2,5 g Metyltriethoxysilan und 7,5 g Dynasilan GLYMO gegeben. In dem so erhaltenen Sol, das zunächst für einige Stunden weiter gerührt wurde, werden dann 140 g des Aluminiumoxids AICoA CT3000 und 7 g Aerosil Ox50 suspendiert. Diese Suspension wird für mindestens weitere 72 h mit einem Magnetrührer homogenisiert, wobei das Rührgefäß abgedeckt werden muss, damit es nicht zu einem Lösemittelverlust kommt.

Ein 56 cm breites PET-Vlies mit einer Dicke von ca. 13 µm und einem Flächengewicht von etwa 6 g/m² wird dann mit einem kontinuierlichen Aufwalzverfahren (Bandgeschwindigkeit ca. 30 m/h, T = 200 °C) mit obiger Suspension beschichtet. Man erhält auf diese Weise einen Separator mit einer mittleren Porenweite von 80 nm, der eine sehr gute Haftfestigkeit und eine Dicke von ca. 24 µm aufweist.

### Beispiel 2: Herstellung eines erfindungsgemäßen S240PF-T Separators

Zu 140 g Wasser und 10 g Ethanol wurden zunächst 30 g einer 5 Gew.-%igen, wässerigen HCI-Lösung, 10 g Tetraethoxysilan, 2,5 g Methyltriethoxysilan und 7,5 g Dynasilan GLYMO gegeben. In dem so erhaltenen Sol, das zunächst für einige Stunden gerührt wurde, werden dann 265 g des Aluminiumoxids AICoA CT1200 SG und 3,3 g Li_{1,3}Al_{0,7}Ti_{1,4}(PO₄)₃ suspendiert. Diese Suspension (Schlicker) wird für mindestens weitere 24 h mit einem Magnetrührer homogenisiert, wobei das Rührgefäß abgedeckt werden muss, damit es nicht zu einem Lösemittelverlust kommt.

Ein 56 cm breites PET-Vlies mit einer Dicke von ca. 13 µm und einem Flächengewicht von etwa 6 g/m² wird dann in einem kontinuierlichen Aufwalzverfahren (Bandgeschwindigkeit ca. 30 m/h, T: 200 °C) mit obiger Suspension beschichtet. Man erhält auf diese Weise einen Separator mit einer mittleren Porenweite von 240 nm, der eine sehr gute Haftfestigkeit und eine Dicke von ca. 27 µm aufweist.

### Beispiel 3: Herstellung eines erfindungsgemäßen S450PET Separators

Ein gemäß Referenzbeispiel 1 hergestellter Separator wird mit einer wässerigen 1 Gew.-%igen Suspension von feinteiligem ZrO₂ (VPH, Degussa AG) in einem kontinuierlichen lmprägnierprozess beschichtet und bei 210 °C getrocknet.

### Beispiel 4: Herstellung eines erfindungsgemäßen S800PET Separators

Ein gemäß Referenzbeispiel 1 hergestellter Separator wird mit einer wasserfreien, ethanolischen 1 Gew.-%igen Suspension von feinteiligem Li₃N in einem kontinuierlichen Imprägnierprozess beschichtet und bei 210 °C getrocknet.

### Testbeispiel 2: Lithium Batterie mit einem erfindungsgemäßen S45OPET Separator

Der in Beispiel 3 hergestellte S450PET-Separator wird in eine Li-lonen-Zelle, bestehend aus einer Positiv-Masse aus LiCoO₂, einer Negativ-Masse bestehend aus Graphit und einem Elektrolyten aus LiPF₆ in Ethylencarbonat/Dimethylcarbonat (EC/DC), eingebaut [LiCoO₂ // S450PET, EC/DMC 1:1, IM LiPF₆ // Graphit]. Es wurde das Ladeverhalten dieser Batterie überprüft. Die Batterie zeigte nach mehr als 500 Zyklen nur einen sehr geringen Abfall der Kapazität um wenige Prozentpunkte. Auch eine Erhöhung der Ladespannung von 4,1 auf 4,2 Volt im 450sten Ladezyklus schadete der Batterie nicht.

Selbst bei einer Lagerung dieser Batterie zwischen den Zyklen in voll-, teil- oder entladenem Zustand bei erhöhter Temperatur (50 - 60 °C) nimmt die Kapazität der Zellen nur sehr moderat ab. Batterien, die mit einem solchen Separator ausgestattet sind, lassen sich also sehr gut auch in Anwendungen einsetzen, bei denen eine Erwärmung auf über 50 °C nicht ausgeschlossen werden kann.

## Patentansprüche

1. Separator für eine elektrochemische Zelle, umfassend
(A) einen flexiblen, durchbrochenen Träger,
(B) ein poröses erstes Keramikmaterial mit dem die Durchbrechungen des Trägers gefüllt sind, wobei das Keramikmaterial
(i) eine Porenstruktur aufweist, die durch eine mittlere Porengröße gekennzeichnet ist, und
(ii) zur Aufnahme eines Elektrolyten zur lonenleitung geeignet ist,
**dadurch gekennzeichnet, dass**
(C) die mit dem Elektrolyten kontaktierbare Porenoberfläche des ersten porösen Keramikmaterials zur Erhöhung der Standzeit mit feinen Teilchen eines weiteren Materials belegt ist, wobei die mittlere Teilchengröße der feinen Teilchen im Bereich von 0,5 bis 30 %, vorzugsweise 1 bis 15 %, der mittleren Porengröße des Keramikmaterials liegt,
wobei der Separator weiterhin mindestens einen Haftvermittler auf Basis funktionalisierter Silane aufweist.

2. Der Separator nach Anspruch 1, wobei das Material der feinen Teilchen gleich oder verschieden von dem porösen Keramikmaterial ist.

3. Der Separator nach Anspruch 2, wobei das Material der feinen Teilchen verschieden von dem porösen Keramikmaterial ist.

4. Der Separator nach Anspruch 2 oder 3, wobei die feinen Teilchen SiO₂, Al₂O₃, ZrO₂ oder SiC umfassen.

5. Der Separator nach einem der Ansprüche 2 bis 4, wobei die feinen Teilchen Li₂CO₃, Li₃N, LiAlO₂, oder LiₓAl_{y}Ti_{z}(PO₄)₃ mit 1 ≤ x ≤ 2, 0 ≤ y ≤ 1 und 1 ≤ z ≤ 2, umfassen.

6. Der Separator nach einem der vorstehenden Ansprüche, der einen Elektrolyten zur lonenleitung, bevorzugt Alkali- und Erdalkaliionenleitung und besonders bevorzugt Lithiumionenleitung, umfasst.

7. Der Separator nach einem der vorstehenden Ansprüche, wobei die feinen Teilchen dem porösen ersten Keramikmaterial einverleibt sind und auf der Porenoberfläche exponiert vorliegen.

8. Der Separator nach einem der vorstehenden Ansprüche, wobei das poröse erste Keramikmaterial mit den feinen Teilchen beschichtet ist.

9. Der Separator nach einem der vorstehenden Ansprüche, **dadurch gekennzeichnet, dass** das Keramikmaterial eine mittlere Porengröße im Bereich von 50 nm bis 5 µm aufweist.

10. Der Separator nach einem der vorstehenden Ansprüche, wobei das feine Teilchen aufweisende poröse Keramikmaterial eine Porosität von 10 % bis 70 %, vorzugsweise von 20 % bis 50 % aufweist.

11. Der Separator nach einem der vorstehenden Ansprüche, wobei das Keramikmaterial ein Oxid von Zirkonium, Silizium und/oder vorzugsweise Aluminium umfasst.

12. Der Separator nach einem der vorstehenden Ansprüche, wobei das erste Keramikmaterial herstellbar ist durch Verfestigung eines Schlickers, der Teilchen mit einer großen mittleren Teilchengröße enthält, die die Porenstruktur des Keramikmaterials bestimmen sowie Teilchen mit einer kleineren mittleren Primärteilchengröße, die bei der Verfestigung des Schlickers die großen Teilchen verkleben.

13. Der Separator nach einem der vorstehenden Ansprüche, wobei der durchbrochene Träger Polymerfasern, Glas oder Keramik umfasst.

14. Der Separator nach einem der vorstehenden Ansprüche, wobei der durchbrochene Träger Fasern, ausgewählt aus Fasern von Polyamid, Polyacrylnitril, Polyester und/oder Polyolefin, Glasfasern oder Keramikfasern, umfasst.

15. Der Separator nach einem der vorstehenden Ansprüche, wobei der Träger Fasern und/oder Filamente mit einem Durchmesser von 1 bis 150 µm, vorzugsweise 1 bis 20 µm, und/oder Fäden mit einem Durchmesser von 3 bis 150 µm, vorzugsweise 10 bis 70 µm, umfasst.

16. Der Separator nach einem der vorstehenden Ansprüche, wobei der Träger ein Vlies mit einer Porenweite von 5 bis 500 µm, vorzugsweise 10 bis 200 µm, ist.

17. Der Separator nach einem der vorstehenden Ansprüche, der unter Einsatzbedingungen bei mindestens 100 °C, vorzugsweise bei mindestens 150 °C, und ganz besonders bevorzugt bei mindestens 180 °C, stabil ist.

18. Der Separator nach einem der vorstehenden Ansprüche, der eine Dicke im Bereich von 10 bis 1000 µm, vorzugsweise 10 bis 100 µm, ganz besonders bevorzugt 10 bis 50 µm aufweist.

19. Der Separator nach einem der vorstehenden Ansprüche, der einen Biegeradius bis herab zu 100 mm, vorzugsweise bis herab zu 20 mm, ganz besonders bevorzugt bis herab zu 1 mm toleriert.

20. Verfahren zur Herstellung eines Separators für eine elektrochemische Zelle nach einem der Ansprüche 1 bis 19, umfassend folgende Schritte:
(a) Aufbringen einer Dispersion als dünne Schicht auf und in ein Gewebe und/oder Vlies, wobei die Dispersion
(a1) große Keramikteilchen deren mittlere Teilchengröße eine Porenstruktur der Schicht bereitstellt, die durch einen mittleren Porendurchmesser gekennzeichnet ist,
(a2) feine Teilchen deren mittlere Teilchengröße im Bereich von 0,5 bis 30%, vorzugsweise 1 bis 15%, der mittleren Porengröße des Keramikmaterials liegt sowie
(a3) gegebenenfalls Keramikteilchen mit einer mittleren Primärteilchengröße die wesentlich geringer ist als die mittlere Teilchengröße der Keramikteilchen gemäß (a1) und (a2) umfasst,
(b) Verfestigen der Dispersion bei einer Temperatur von 100 °C bis 680 °C, um einen Separator zu schaffen,
wobei die Dispersion mindestens einen Haftvermittler auf Basis funktionalisierter Silane aufweist oder wobei das Gewebe und/oder Vlies vor Schritt (a) mit dem Haftvermittler beschichtet wurde.

21. Verfahren nach Anspruch 20, wobei die Dispersion in Schritt (a) zusätzlich ein Sol, vorzugsweise der Elemente Aluminium, Zirkonium und/oder Silizium, umfasst.

22. Verfahren zur Herstellung eines Separators für eine elektrochemische Zelle nach einem der Ansprüche 1 bis 19, umfassend folgende Schritte:
(i) Bereitstellung eines Verbundwerkstoffs aus einem durchbrochenen Träger, vorzugsweise einem Gewebe und/oder Vlies,
sowie einem porösen Keramikmaterial dessen Porenstruktur durch eine mittlere Porengröße gekennzeichnet ist,
(ii) Behandlung des Verbundwerkstoffs mit einer Dispersion aus feinen Teilchen mit einer mittleren Teilchengröße im Bereich von 0,5 bis 30 %, vorzugsweise 1 bis 15 %, der mittleren Porengröße, in einem Dispergiermittel, so dass die für einen Elektrolyt zugängliche Porenoberfläche des Verbundwerkstoffs mit der Dispersion beschichtet wird und die Dispersion vorzugsweise 1 bis 25 Gew.-%, insbesondere 5 bis 15 Gew.-% feine Teilchen enthält;
(iii) Trocknen der Dispersion bei einer Temperatur von 100 °C bis 680 °C, so dass die beschichtete Porenoberfläche mit den feinen Teilchen belegt ist,
wobei die Dispersion mindestens einen Haftvermittler auf Basis funktionalisierter Silane aufweist oder wobei das Gewebe und/oder Vlies vor Schritt (ii) mit dem Haftvermittler beschichtet wurde.

23. Verfahren nach Anspruch 22, wobei der Verbundwerkstoff ein Separator ist, der erhältlich ist nach dem Verfahren von Anspruch 20 oder 21.

24. Verfahren nach einem der Ansprüche 20 bis 23, wobei die Dispersion eine oder mehrere zusätzliche Komponenten enthält, die ausgewählt sind aus Dispergierhilfsmitteln, Mitteln zur Einstellung der Viskosität, Mitteln zur Einstellung der Fließeigenschaften oder anderen üblichen Hilfsstoffen zur Herstellung von Dispersionen.

25. Verfahren nach einem der Ansprüche 20 bis 24, wobei das Dispergiermittel Wasser enthält und die feinen Teilchen hydrolysestabile Elementoxidteilchen sind, oder:
wobei das Dispergiermittel ein wasserfreies organisches Lösemittel ist und die feinen Teilchen hydrolyseempfindliche Materialien umfassen.

26. Verfahren nach einem der Ansprüche 20 bis 25, wobei die Keramikteilchen ein Material umfassen, das ausgewählt ist aus der Gruppe, bestehend aus Aluminiumoxid, Siliciumoxid und Zirkonoxid oder aus deren Mischoxiden.

27. Elektrochemische Zelle, insbesondere eine Lithium-Batterie, Lithiumionen-Batterie oder eine Lithium-Polymer-Batterie, wobei die Zelle einen Separator nach einem der Ansprüche 1 bis 19 umfasst.

28. Verwendung eines Separators nach einem der Ansprüche 1 bis 19 zur Herstellung einer elektrochemischen Zelle, insbesondere einer Lithium-Batterie, Lithiumionen-Batterie oder einer Lithium-Polymer-Batterie, jeweils bevorzugt für Hochstromanwendungen.

## Claims

1. Separator for an electrochemical cell, comprising
(A) a flexible perforate support,
(B) a porous first ceramic material which fills the perforations in the support and which
(i) has a pore structure which is **characterized by** an average pore size, and
(ii) is suitable for receiving an ionconducting electrolyte,
**characterized in that**
(C) the electrolyte-contactable pore surface of the first porous ceramic material is covered with fine particles of a further material to extend the use life, the average size of the fine particles being in the range from 0.5 to 30% and preferably in the range from 1 to 15% of the average pore size of the ceramic material,
wherein the separator additionally includes at least one adhesion promoter based on functionalized silanes.

2. Separator according to Claim 1, wherein the material of the fine particles is identical to or different from the porous ceramic material.

3. Separator according to Claim 2, wherein the material of the fine particles is different from the porous ceramic material.

4. Separator according to Claim 2 or 3, wherein the fine particles comprise SiO₂, Al₂O₃, ZrO₂ or SiC.

5. Separator according to any of Claims 2 to 4, wherein the fine particles comprise Li₂CO₃, Li₃N, LiAlO₂ or LiₓAl_{y}Ti_{z}(PO₄)₃ where 1 ≤ x ≤ 2, 0 ≤ y ≤ 1 and 1 ≤ z ≤ 2.

6. Separator according to any preceding claim, comprising an electrolyte for ion conductance, preferably alkali and alkaline earth metal ion conductance and more preferably lithium ion conductance.

7. Separator according to any preceding claim, wherein the fine particles are incorporated in the porous first ceramic material and are exposed on the pore surface.

8. Separator according to any preceding claim, wherein the porous first ceramic material is coated with the fine particles.

9. Separator according to any preceding claim, **characterized in that** the ceramic material has an average pore size in the range from 50 nm to 5 µm.

10. Separator according to any preceding claim, wherein the porous ceramic material comprising fine particles has a porosity in the range from 10% to 70% and preferably in the range from 20% to 50%.

11. Separator according to any preceding claim, wherein the ceramic material comprises an oxide of zirconium, silicon and/or preferably aluminum.

12. Separator according to any preceding claim, wherein the first ceramic material is producible by solidifying a slip which contains particles having a large average particle size which determine the pore structure of the ceramic material and also particles having a smaller average primary particle size which adhere the large particles together in the course of the solidification of the slip.

13. Separator according to any preceding claim, wherein the perforate support comprises polymer fibers, glass or ceramic.

14. Separator according to any preceding claim, wherein the perforate support comprises fibers, selected from fibers of polyamide, polyacrylonitrile, polyester and/or polyolefin, glass fibers or ceramic fibers.

15. Separator according to any preceding claim, wherein the support comprises fibers and/or filaments from 1 to 150 µm and preferably from 1 to 20 µm in diameter and/or yarn from 3 to 150 µm and preferably from 10 to 70 µm in diameter.

16. Separator according to any preceding claim, wherein the support is a nonwoven having a pore size from 5 to 500 µm and preferably from 10 to 200 µm.

17. Separator according to any preceding claim that is stable under service conditions at not less than 100°C, preferably at not less than 150°C and most preferably at not less than 180°C.

18. Separator according to any preceding claim, from 10 to 1000 µm, preferably from 10 to 100 µm and most preferably from 10 to 50 µm in thickness.

19. Separator according to any preceding claim that tolerates a bending radius down to 100 mm, preferably down to 20 mm and most preferably down to 1 mm.

20. Process for producing a separator for an electrochemical cell according to any of Claims 1 to 19, comprising the following steps:
(a) applying a dispersion as a thin layer onto and into a woven and/or nonwoven, wherein the dispersion comprises
(a1) large ceramic particles whose average particle size provides a pore structure to the layer that is **characterized by** an average pore diameter,
(a2) fine particles whose average particle size is in the range from 0.5 to 30% and preferably in the range from 1 to 15%, of the average pore size of the ceramic material, and also
(a3) optionally, ceramic particles having an average primary particle size which is substantially less than the average particle size of the ceramic particles as per (a1) and (a2),
(b) solidifying the dispersion at a temperature from 100°C to 680°C to form a separator,
wherein the dispersion includes at least one adhesion promoter based on functionalized silanes or wherein the woven and/or nonwoven has been coated with the adhesion promoter prior to step (a).

21. Process according to Claim 20, wherein the dispersion in step (a) further comprises a sol, preferably of the elements aluminum, zirconium and/or silicon.

22. Process for producing a separator for an electrochemical cell according to any of Claims 1 to 19, comprising the following steps:
(i) providing a composite formed from a perforate support, preferably a woven and/or nonwoven, and also a porous ceramic material whose pore structure is **characterized by** an average pore size,
(ii) treating the composite with a dispersion of fine particles having an average particle size in the range from 0.5 to 30% and preferably in the range from 1 to 15% of the average pore size in a dispersion medium so that the electrolyte-accessible pore surface of the composite is coated with the dispersion and the dispersion preferably contains from 1 to 25% by weight, especially from 5 to 15% by weight of fine particles;
(iii) drying the dispersion at a temperature in the range from 100°C to 680°C so that the coated pore surface is coated with the fine particles,
wherein the dispersion includes at least one adhesion promoter based on functionalized silanes or wherein the woven and/or nonwoven has been coated with the adhesion promoter prior to step (ii).

23. Process according to Claim 22, wherein the composite is a separator which is obtainable by the process according to Claim 20 or 21.

24. Process according to any of Claims 20 to 23, wherein the dispersion contains one or more additional components selected from dispersing assistants, agents for setting the viscosity, agents for setting the flow properties or other customary assistants for producing dispersions.

25. Process according to any of Claims 20 to 24, wherein the dispersion medium contains water and the fine particles are hydrolysis-stable element oxide particles, or:
wherein the dispersion medium is an anhydrous organic solvent and the fine particles comprise hydrolysis-sensitive materials.

26. Process according to any of Claims 20 to 25, wherein the ceramic particles comprise a material selected from the group consisting of aluminum oxide, silicon oxide and zirconium oxide or mixtures thereof.

27. Electrochemical cell, especially a lithium battery, lithium ion battery or a lithium polymer battery, wherein the cell comprises a separator according to any of Claims 1 to 19.

28. Use of a separator according to any of Claims 1 to 19 for producing an electrochemical cell, especially a lithium battery, lithium ion battery or a lithium polymer battery, each preferably for high current applications.

## Revendications

1. Séparateur pour une cellule électrochimique, comprenant
(A) un support flexible, percé,
(B) un premier matériau poreux de céramique avec lequel les perçages du support sont remplis, le matériau de céramique
(i) présentant une structure de pore, qui est **caractérisée par** une grosseur moyenne de pore, et
(ii) étant adapté à l'inclusion d'un électrolyte pour la conduction d'ions,
**caractérisé en ce que**
(C) la surface des pores pouvant être en contact avec l'électrolyte du premier matériau poreux de céramique est occupée avec des particules fines d'un autre matériau pour l'augmentation de la durée de vie, la grosseur moyenne de particule des particules fines se situant dans la plage de 0,5 à 30 %, de préférence de 1 à 15 % de la grosseur moyenne de pore du matériau de céramique,
le séparateur présentant de plus au moins un agent adhésif à base de silanes fonctionnalisés.

2. Séparateur selon la revendication 1, le matériau des particules fines étant identique ou différent du matériau poreux de céramique.

3. Séparateur selon la revendication 2, le matériau des particules fines étant différent du matériau poreux de céramique.

4. Séparateur selon la revendication 2 ou 3, les particules fines comprenant SiO₂, Al₂O₃, ZrO₂ ou SiC.

5. Séparateur selon l'une quelconque des revendications 2 à 4, les particules fines comprenant Li₂CO₃, Li₃N, LiAlO₂ ou LiₓAl_{y}Ti_{z}(PO₄)₃ avec 1 ≤ x ≤ 2, 0 ≤ y ≤ 1 et 1 ≤ z ≤ 2.

6. Séparateur selon l'une quelconque des revendications précédentes, qui comprend un électrolyte pour la conduction d'ions, préférablement pour la conduction d'ions alcalins ou alcalinoterreux et particulièrement préférablement pour la conduction d'ions lithium.

7. Séparateur selon l'une quelconque des revendications précédentes, les particules fines étant incorporées au premier matériau poreux de céramique et étant présentes de manière exposée sur la surface des pores.

8. Séparateur selon l'une quelconque des revendications précédentes, le premier matériau poreux de céramique étant revêtu avec les particules fines.

9. Séparateur selon l'une quelconque des revendications précédentes, **caractérisé en ce que** le matériau de céramique présente une grosseur moyenne de pore dans la plage de 50 nm à 5 µm.

10. Séparateur selon l'une quelconque des revendications précédentes, le matériau poreux de céramique présentant des particules fines présentant une porosité de 10 % à 70 %, de préférence de 20 % à 50 %.

11. Séparateur selon l'une quelconque des revendications précédentes, le matériau de céramique comprenant un oxyde de zirconium, de silicium et/ou de préférence d'aluminium.

12. Séparateur selon l'une quelconque des revendications précédentes, le premier matériau de céramique pouvant être préparé par renforcement d'une barbotine, qui contient des particules dotées d'une grosseur moyenne de particule élevée, qui déterminent la structure de pore du matériau de céramique, ainsi que des particules dotées d'une grosseur moyenne de particule primaire plus petite, qui collent les grosses particules lors du renforcement de la barbotine.

13. Séparateur selon l'une quelconque des revendications précédentes, le support percé comprenant des fibres de polymère, du verre ou de la céramique.

14. Séparateur selon l'une quelconque des revendications précédentes, le support percé comprenant des fibres, choisies parmi des fibres de polyamide, de polyacrylonitrile, de polyester et/ou de polyoléfine, des fibres de verre ou des fibres de céramique.

15. Séparateur selon l'une quelconque des revendications précédentes, le support comprenant des fibres et/ou des filaments d'un diamètre de 1 à 150 µm, de préférence de 1 à 20 µm, et/ou des fils d'un diamètre de 3 à 150 µm, de préférence de 10 à 70 µm.

16. Séparateur selon l'une quelconque des revendications précédentes, le support étant un non-tissé doté d'une largeur de pore de 5 à 500 µm, de préférence de 10 à 200 µm.

17. Séparateur selon l'une quelconque des revendications précédentes, qui est stable dans des conditions d'utilisation à au moins 100 °C, de préférence à au moins 150 °C, et tout particulièrement préférablement à au moins 180 °C.

18. Séparateur selon l'une quelconque des revendications précédentes, qui présente une épaisseur dans la plage de 10 à 1000 µm, de préférence de 10 à 100 µm, tout particulièrement préférablement de 10 à 50 µm.

19. Séparateur selon l'une quelconque des revendications précédentes, qui tolère un rayon de courbure allant jusqu'à 100 mm, de préférence allant jusqu'à 20 mm, tout particulièrement préférablement allant jusqu'à 1 mm.

20. Procédé pour la préparation d'un séparateur pour une cellule électrochimique selon l'une quelconque des revendications 1 à 19, comprenant les étapes suivantes :
(a) application d'une dispersion en tant que couche fine sur et dans un tissu et/ou un non-tissé, la dispersion comprenant
(a1) des grosses particules de céramique dont la grosseur moyenne de particule fournit une structure de pore de la couche, qui est **caractérisée par** un diamètre moyen de pore,
(a2) des particules fines dont la grosseur moyenne de particule se situe dans la plage de 0,5 à 30 %, de préférence de 1 à 15 %, de la grosseur moyenne de pore du matériau de céramique, ainsi que
(a3) éventuellement des particules de céramique dotées d'une grosseur moyenne de particule primaire, qui est sensiblement plus faible que la grosseur moyenne de particule du matériau de céramique selon (a1) et (a2),
(b) renforcement de la dispersion à une température entre 100 °C et 680 °C, afin de créer un séparateur,
la dispersion présentant au moins un agent adhésif à base de silanes fonctionnalisés, ou le tissu et/ou le non-tissé ayant été revêtu par l'agent adhésif avant l'étape (a).

21. Procédé selon la revendication 20, la dispersion comprenant de plus dans l'étape (a) un sol, composé de préférence des éléments aluminium, zirconium et/ou silicium.

22. Procédé pour la préparation d'un séparateur pour une cellule électrochimique selon l'une quelconque des revendications 1 à 19, comprenant les étapes suivantes :
(i) mise à disposition d'un matériau composite composé d'un support percé, de préférence d'un tissu et/ou d'un non-tissé,
ainsi que d'un matériau poreux de céramique dont la structure de pore est **caractérisée par** une grosseur moyenne de pore,
(ii) traitement du matériau composite avec une dispersion de particules fines dotées d'une grosseur moyenne de particule dans la plage de 0,5 à 30 %, de préférence 1 à 15 %, de la grosseur moyenne de particule, dans un agent de dispersion, de sorte que la surface des pores du matériau composite accessible par un électrolyte est revêtue par la dispersion et la dispersion contient de préférence 1 à 25 % en poids, en particulier 5 à 15 % en poids, de particules fines ;
(iii) séchage de la dispersion à une température de 100 °C à 680 °C, de sorte que la surface des pores revêtue est occupée par les particules fines,
la dispersion présentant au moins un agent adhésif à base de silanes fonctionnalisés, ou le tissu et/ou le non-tissé ayant été revêtu par l'agent adhésif avant l'étape (ii).

23. Procédé selon la revendication 22, le matériau composite étant un séparateur, qui peut être obtenu par le procédé de la revendication 20 ou 21.

24. Procédé selon l'une quelconque des revendications 20 à 23, la dispersion contenant un ou plusieurs composants supplémentaires, qui sont choisis parmi des adjuvants de dispersion, des produits pour l'ajustement de la viscosité, des produits pour l'ajustement des propriétés d'écoulement ou d'autres adjuvants habituels pour la préparation de dispersions.

25. Procédé selon l'une quelconque des revendications 20 à 24, l'agent de dispersion contenant de l'eau et les particules fines étant des particules d'oxyde d'élément stables à l'hydrolyse, ou :
l'agent de dispersion étant un solvant organique exempt d'eau et les particules fines comprenant des matériaux sensibles à l'hydrolyse.

26. Procédé selon l'une quelconque des revendications 20 à 25, les particules de céramique comprenant un matériau, qui est choisi dans le groupe constitué par l'oxyde d'aluminium, l'oxyde de silicium et l'oxyde de zirconium ou de leurs oxydes mixtes.

27. Cellule électrochimique, en particulier une batterie au lithium, une batterie aux ions lithium ou une batterie lithium-polymère, la cellule comprenant un séparateur selon l'une quelconque des revendications 1 à 19.

28. Utilisation d'un séparateur selon l'une quelconque des revendications 1 à 19 pour la préparation d'une cellule électrochimique, en particulier d'une batterie au lithium, d'une batterie aux ions lithium ou d'une batterie lithium-polymère, à chaque fois préférablement pour des utilisations à courant élevé.
